# EUROPEAN PATENT SPECIFICATION

(11) **EP 1 084 901 B1**
(45) Date of publication and mention of the grant of the patent: **14.06.2006**
(21) Application number: 00117669.2
(22) Date of filing: 16.08.2000
(51) Int. Cl.: B60N 2/427, B60N 2/48, B60N 2/42

(54) **A passenger safety device for an automotive vehicle seat**
Insassenschutzvorrichtung für Fahrzeugsitze
Dispositif de protection de passager pour siège de véhicule

(30) Priority: 17.09.1999 JP 26340999; 10.02.2000 JP 2000032988
(43) Date of publication of application: 21.03.2001
(73) Proprietor: Mazda Motor Corporation, Aki-gun, Hiroshima-ken (JP)
(72) Inventor: Okano, Naoki, c/o Mazda Motor Corporation, Aki-gun, Hiroshima-ken (JP); Ishikawa, Toshihiro, c/o Mazda Motor Corporation, Aki-gun, Hiroshima-ken (JP); Kage, Masayuki, c/o Mazda Motor Corporation, Aki-gun, Hiroshima-ken (JP); Ishikura, Kazutaka, c/o Mazda Motor Corporation, Aki-gun, Hiroshima-ken (JP)
(74) Representative: Müller-Boré & Partner Patentanwälte

(56) References cited:
- EP-A- 0 888 926
- WO-A-97/10117
- DE-A- 19 646 304
- DE-A- 19 853 981
- US-A- 5 437 494

## Description

This invention relates to a seat apparatus for an automotive vehicle, and particularly to a seat apparatus capable of moving a head rest forward and upward upon a rear crash of a vehicle.

Conventionally, a seat apparatus for an automotive vehicle is provided with a seat cushion, a seat back coupled to and supported on seat cushion brackets of the seat cushion, and a head rest fitted on the seat back. The head rest is adapted to lightly receive a head of a driver or passenger and protect his head which tries to move backward with respect to the vehicle upon a rear crash of the vehicle. Accordingly, seat apparatus having a head rest whose position is adjustable along vertical direction and forward and backward directions according to a body build of a passenger have been widely used.

The shorter a distance between the passenger's head and the head rest at the time of a rear crash of the vehicle, the more effective the head rest functions to protect the passenger's head. However, even if the position of the head rest is adjusted according to the body build of the passenger, it is impossible to keep on driving in such a posture where the distance between the head and the head rest is constantly short in preparation for a rear crash of the vehicle. Further, it is impossible to bring the head rest closer to the head in a moment immediately before the rear crash. Consequently, it is difficult to effectively protect the passenger's head.

In view of the above problem, there have been proposed seat apparatus which are constructed such that a head rest is forcibly moved toward a passenger's head from its usual position where the head rest is usually located to receive the passenger's head which tries to move backward with respect to a vehicle in order to securely protect the passenger's head upon a rear crash of the vehicle.

One example of such seat apparatus is disclosed in JP 10-80338 A. This seat apparatus is provided with a seat back including a seat back frame set in a substantially vertical position and an impact pressure receiving frame located in front of the seat back frame, and constructed such that the bottom end of a head rest supporting frame for supporting a head rest is coupled to the upper end of the impact pressure receiving frame from behind, and an intermediate portion of the head rest supporting frame is rotatably coupled to the upper end of the seat back frame. Upon a rear crash of a vehicle, the impact pressure receiving frame is pushed backward according to a load exerted on the impact pressure receiving frame substantially by the passenger's back and neighboring body parts, thereby rotating the head rest supporting frame to move the head rest forward from its usual position where it is usually located to a position near a passenger's head.

In a seat apparatus disclosed in JP 7-291005 A, a substantially vertical head rest supporting frame for supporting a head rest is coupled to the back side of a substantially vertical seat back frame provided in a seat back via a pair of transversely arranged coupling members substantially in the form of bellows. Further, an intermediate portion of the head rest supporting frame is rotatably coupled to the upper end of the seat back frame, and a transversely expandable spring member is mounted near the coupling members. A load exerted on the bottom end of the head rest supporting frame via the spring member by a passenger's back and neighboring body parts upon a rear crash of a vehicle, thereby elongating the coupling members backward, the head rest supporting frame is accordingly rotated and the head rest provided at the top thereof is moved closer to the passenger's head.

In a seat apparatus disclosed in FIGS. 1 and 2 of WO97/10117 A, a pair of seat cushion brackets provided on the left and right sides of a seat cushion extend substantially to the rear sides of a passenger's shoulders, an upper and a lower straight hollow guides are formed at the upper and lower ends of each seat cushion bracket, and a pair of engaging pins projecting from side portions of the seat back are fitted into the hollow guides. The upper hollow guides extend substantially in vertical direction, whereas the lower hollow guides extend obliquely backward. The seat back is rotatable about an instantaneous center which is approximately calculated as an intersection of perpendicular bisectors of line segments connecting the opposite ends of the pair of hollow guides.

Usually, the seat back and the seat cushion brackets are connected by connection pins in an usual position of the seat back where the engaging pins are engaged with the hollow guides at the bottom ends of the seat cushion brackets. A load exerted on the seat back by the passenger upon a rear crash of the vehicle, the connection pins are broken and the engaging pins are moved straight by being guided by the hollow guides, with the result that the seat back is rotated about the instantaneous center to move the head rest forward and upward. However, since the pairs of upper and lower hollow guides are straight, the instantaneous center of the seat back calculated as described above is substantially a constant position, namely located near the passenger's chest.

In a seat apparatus disclosed in FIGS. 5 and 6 of the above International Patent Publication, a seat cushion and seat cushion brackets are coupled via a pair of front and rear links disposed at different angles, and are usually connected by connection pins. A load exerted on the seat back by a passenger upon a rear crash of a vehicle, the connection pins are broken to pivot the links, and the seat back is rotated about an instantaneous center to move a head rest forward and upward. The instantaneous center of the seat back is calculated as an intersection of straight lines connecting points of rotation of the pairs of left and right links and is moved backward and downward as the seat back rotates.

In the seat apparatus disclosed in JP 10-80338 A and JP 7-291005 A, a load is exerted on the impact pressure receiving frame by the passenger's back and neighboring body parts upon a rear crash of the vehicle, thereby rotating the head rest forward. In other words, since the lead is exerted on the impact pressure receiving frame by the passenger's back and neighboring body parts which are located above a center of gravity of the passenger upon the rear crash of the vehicle and the seat back is likely to undergo a larger deformation toward its upper end upon receiving the passenger, there is a limit in the load exerted on the impact pressure receiving frame, i.e., a limit in increasing a force for rotating the head rest. Therefore, the head rest cannot be quickly moved forward, which deteriorates a moving response of the head rest.

Further, since the intermediate portion of the head rest supporting frame is rotatably coupled to the seat back frame and the heat rest is provided substantially above this coupling portion, the head rest can only be moved substantially forward upon exertion of the load by the passenger. However, the upper part of the seat back is usually inclined backward and, accordingly, the passenger is likely to move backward and obliquely upward along the seat back upon a rear crash of the vehicle and his head consequently tends to project above the head rest. Therefore, it is desirable to move the head rest forward and upward in order to effectively receive the passenger's head by the head rest upon a rear crash of the vehicle.

Further, since the intermediate portion of the supporting frame is rotatably coupled to the upper end of the seat back frame, it presents a problem of difficulty to enhance rigidity for supporting the load exerted on the head rest by the passenger upon a rear crash of the vehicle. Furthermore, since the head rest is quickly rotated to receive the passenger's head above the instantaneous center upon a crash of the vehicle, there is a likelihood of a large impact of the head rest on the passenger's head. In the seat apparatus constructed to forcibly rotate the head rest upon a rear crash of the vehicle, it is necessary to prevent the head rest having received the passenger's head from easily returning to its usual position as a reaction in order to stably protect the passenger's head.

Further, since the seat apparatus disclosed in FIGS. 1 and 2 of the above International Patent Publication has no concept of moving the instantaneous center, it is difficult to set a proper operation of the head rest (seat back). Specifically, since the upper and lower hollow guides are formed straight, the instantaneous center of the seat back is kept substantially at the constant position near the passenger's shoulders. Thus, a load exerted on the seat back by the passenger's waist part, a large rotation moment acts on the seat back due to a large distance between the passenger's waist part and the instantaneous center. Therefore, the seat back and the seat cushion brackets need to be fairly strongly connected by the pair of left and right connection pins lest the seat back should be rotated by the rotation moment during a usual period.

It may be considered to hold the seat back in the usual position by biasing it by a biasing member provided instead of the connection pins. However, in such a case, the biasing member needs to be very strong and large, and it becomes difficult to quickly bring the head rest closer to the passenger's head upon a rear crash of the vehicle because the seat back is rotated against a very strong biasing force of the biasing member. Further, since the instantaneous center of the seat back is located substantially at the constant position, the horizontal moving speed of the head rest increases as the head rest approaches the passenger's head when the seat back is rotated about its center of rotation upon a rear crash of the vehicle.

In the seat apparatus disclosed in FIGS. 5 and 6 of the above International Patent Publication, the instantaneous center is moved backward and downward as the seat back rotates. Accordingly, the forward moving speed of the head rest increases as the head rest approaches the passenger's head. Further, the instantaneous center of the seat back is moved downward as the seat back rotates. This is not desirable because, when the passenger's head is received by the head rest, a moment trying to return the seat back to its usual position increases by a force exerted by the passenger's head.

DE 196 46 304 A and US 5 437 494 A both disclose a seat apparatus for an automotive vehicle in which a seat back supporting mechanism movably supports the seat back in such a way that a load exerted on the seat back by a passenger's waist part upon a rear crash of the vehicle causes a rotation of the entire seat back from its usual position to thereby move the head rest forward and upward.

It is the object of the invention to provide a novel seat apparatus for an automotive vehicle which can protect the passengers from injury in a favourable way.

This object is fulfilled by a seat apparatus having the features disclosed in claim 1. Preferred embodiments are defined in the dependent claims.

With this construction, the moving response of the seat back is improved, and the head rest fitted on the seat back can be quickly moved forward and upward. Also, the seat back is moved together with the head rest, and the passenger's head which tries to move backward can be securely received by the head rest.

These and other objects, features and advantages of the present invention will become more apparent upon a reading of the following detailed description and accompanying drawings, in which:
FIG. 1 is a side view of a seat apparatus according to an embodiment of the invention;
FIG. 2 is a front view of the seat apparatus;
FIG. 3 is an exploded perspective view showing an essential portion of the seat apparatus;
FIG. 4 is a side view of the essential portion showing the seat apparatus;
FIG. 5 is a diagram showing how the seat apparatus operates;
FIG. 6 is a side view showing an essential portion of a seat apparatus according to a first modification;
FIG. 7 is a diagram showing how the seat apparatus of FIG. 6 operates;
FIG. 8 is a side view showing an essential portion of a seat apparatus according to a second modification;
FIG. 9 is a side view showing an essential portion of a seat apparatus according to a comparative example;
FIG. 10 is a diagram showing how a seat apparatus according to a comparative example operates;
FIG. 11 is a diagram showing how a seat apparatus according to a fifth modification operates;
FIG. 12 is a diagram showing how a seat apparatus according to a sixth modification operates;
FIG. 13 is a diagram showing how a seat apparatus according to a seventh modification operates;
FIG. 14 is a side view of a seat apparatus according to an eighth modification and
FIG. 15 is a side view of a seat apparatus according to a ninth modification.

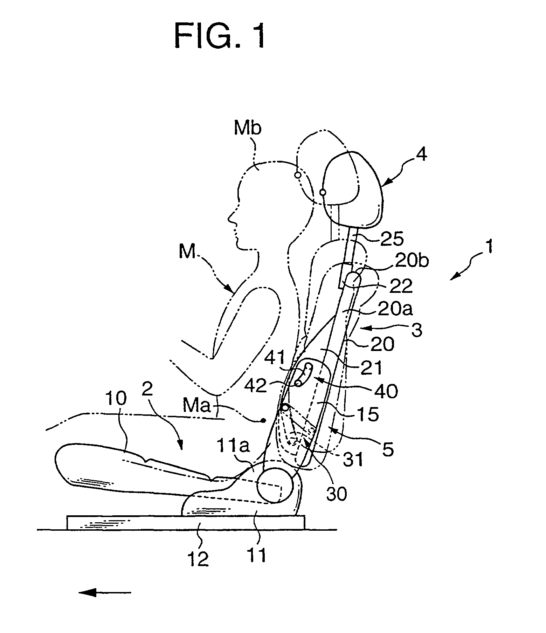

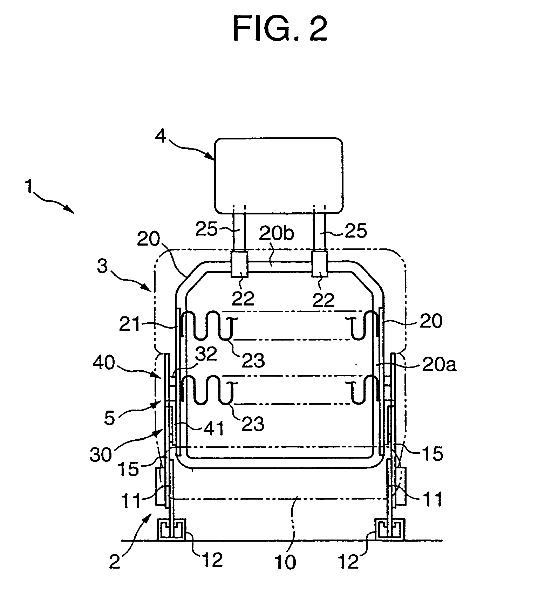

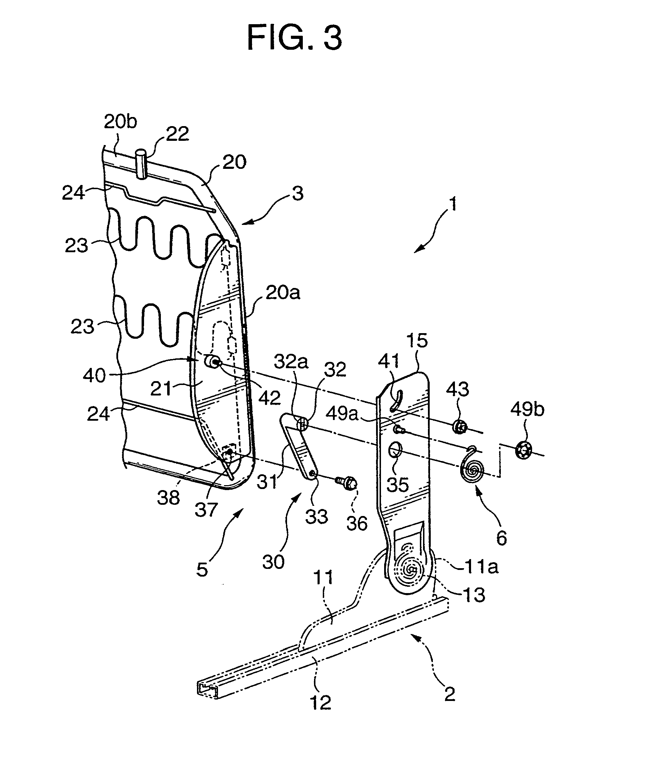

Referring to FIGS. 1 to 3, a seat apparatus 1 according an embodiment of the invention is adapted for an automotive vehicle, and is provided with a seat cushion 2, a seat back 3, a head rest 4, a seat back supporting mechanism 5 for rotatably supporting the seat back 3 with respect to support members or seat cushion brackets 15 provided on the seat cushion 2, and a biasing member formed of a pair of left and right relatively strong springs 6 for biasing the seat back 3 to an usual position.

The seat cushion 2 includes a cushion main body 10 and a pair of base members 11 provided at the opposite sides of a rear portion of the cushion main body 10. Bottom ends of the seat cushion brackets 15 are rotatably coupled to rotation support portions 11a provided at the rear ends of the base members 11 about a transversely extending axis. The seat cushion brackets 15 are vertical plates extending up to a middle position of the seat back 3 with respect to height direction, and the seat back 3 is coupled to the seat cushion brackets 15 via the seat back supporting mechanism 5.

The pair of base members 11 are supported on a pair of guide rails 12 transversely spaced apart and extending in forward and backward directions in such a manner as to be movable forward and backward along the guide rails 12. The base members 11 are also provided with a seat position adjusting mechanism (not shown) for adjusting the position of the seat cushion 2 along forward and backward directions and a seating posture adjusting mechanism (not shown) for adjusting an angle formed between the seat cushion 2 and the seat back 3.

It should be noted that no description is given here on the seat position adjusting mechanism and the seating posture adjusting mechanism since already existing mechanisms can be used as such. Spring members 13 for biasing the seat back to rotate forward are mounted near positions where the corresponding base member 11 and seat cushion bracket 15 are coupled.

The seat back 3 includes a seat back frame 20 made of a pipe material to form a substantially rectangular ring, and a pair of left and right side frames 21 in the form of vertically extending plates which are secured to front portions of vertical tubes 20a located on the left and right sides of the seat back frame 20. The side frames 21 are so disposed as to project forward from the seat back frame 20 and to be slightly distanced inwardly from the respective seat cushion brackets 15.

A pair of transversely spaced head rest holders 22 are secured to a horizontal tube 20b located atop the seat back frame 20, and bottom ends of a pair of transversely spaced head rest frames 25 for supporting the head rest 4 are fitted into the head rest holders 22. A mechanism for adjusting the position of the head rest 4 along vertical direction and forward and backward directions may be provided in a position where the head rest 4 is supported on the seat back 3. Opposite ends of a pair of spring members 23 transversely extending and vertically spaced apart are secured to the vertical tubes 20a, and an upper and a lower transversely extending wires 24 are provided above and below the upper and lower spring members 23, respectively.

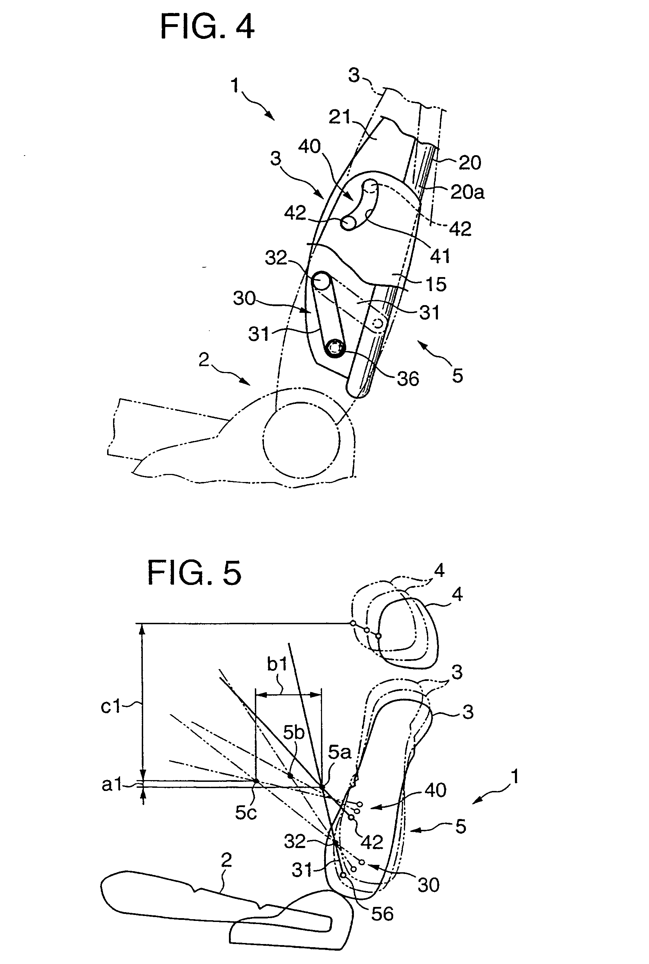

The seat back supporting mechanism 5 is so constructed as to move the head rest 4 forward and upward by, a load exerted on the seat back 3 by a waist Ma and neighboring body parts of a passenger M upon a rear crash of a vehicle, rotating the entire seat back 3 from an usual position where it is usually located (position partly indicated by solid line in FIGS. 1 and 5) about an instantaneous center located above the load exerting position.

Specifically, the seat back supporting mechanism 5 includes a pair of left and right first supporting portions 30 for pivotally supporting the seat back 3 to move it backward and upward along an arcuate trace with respect to the seat cushion 2 when the load is exerted on the seat back 3 by the waist Ma and neighboring body parts of the passenger M, and a pair of left and right second supporting portions 40 for rotatably and movably supporting the seat back 3 with respect to the seat cushion 2. The first and second supporting portions 30, 40 are provided in positions corresponding to the lower half of the seat back 3.

Each first supporting portion 30 has a link 30 whose upper end is rotatably coupled to the corresponding seat cushion bracket 15 and whose bottom end is rotatably coupled to the corresponding side frame 21 of the seat back 3. The seat cushion brackets 15 are coupled to the bottom end of the seat back 3 via the links 31.

More specifically, a shaft 32 projecting outward is provided at the upper end of each link 31, and is inserted into a shaft hole 35 formed at the lower side of a later-described hollow guide 41 provided in the corresponding seat cushion bracket 15 so that the link 31 is rotatably supported. On the other hand, a shaft hole 33 is formed at the bottom end of each link 31. A shaft of a bolt 36 is inserted through the shaft hole 33 and a hole 37 formed in the corresponding side frame 21, and a nut 38 is screwed onto a part of the shaft of the bolt 36 projecting from the side frame 21. In this way, the bottom ends of the seat cushion brackets 15 are coupled to the bottom end of the seat back 3 via the links 31.

Each second supporting portion 40 has an arcuate hollow guide 41 formed in the upper end of the corresponding seat cushion bracket 15 and an engaging pin 42 projecting outward in a middle position of the corresponding side frame 21 with respect to height position. The seat cushion brackets 15 are coupled to the upper end of the lower half of the seat back 3 by the supporting portions 40.

Specifically, nuts 43 are screwed onto the leading ends of the engaging pins 42 inserted through the hollow guides 41 formed in the seat cushion brackets 15, thereby coupling the engaging pins 42 to the seat cushion brackets 15 in such a state where the engaging pins 42 are rotatable with respect to the hollow guides 41 and are movable along the hollow guides 41. The hollow guides 42 have an arcuate shape which is concave backward, and a center angle of its arc is about 40°. In the usual position where the seat back 3 is standing, the engaging pins 42 are locked at the bottom ends of the hollow guides 41 and the links 31 are slightly inclined forward.

The pair of springs 6 is provided outside the corresponding seat cushion brackets 15. One end of each spring 6 is engaged with an engaging groove 32a formed in the shaft 32 of the corresponding link 31, whereas the other end thereof is engaged with a projecting portion 49a provided between the hollow guide 41 and the shaft hole 35 of the corresponding hollow guide 41. Thus, the springs 6 bias the links 31 toward their usual positions and bias the seat back 3 toward its usual position via the links 31. Further, a ring member 49b is secured to the leading end of each shaft 32 to prevent the one end of the corresponding spring 6 from disengaging from the engaging groove 32a and to lock the shaft 32 in the shaft hole 35 so as not to come out.

By providing the seat back supporting mechanism 5 including the first and second supporting portions 30, 40 as described above, the instantaneous center of the seat back 3 transits from a rotation initial position 5a to a rotation end position 5c via a rotation intermediate position 5b as shown in FIG. 5 when the seat back 3 is rotated. The instantaneous center of the seat back 3 in each position is calculated as an intersection of a straight line perpendicular to a moving direction of the engaging pin 42 along the hollow guide 41 and passing the engaging pin 42 (straight line connecting the arc center of the hollow guide 41 and the engaging pin 42) and an extension of the length of the link 31 (straight line connecting the shaft 32 as a center of rotation and the bolt 36 as a coupling portion for coupling the seat cushion bracket 15 to the seat back 3).

As can be seen from FIG. 5, the instantaneous center 5c at the rotation end position of the seat back 3 is located above the instantaneous center 5a at the usual position by a distance a1 and before it by a distance b1. In other words, the seat back supporting mechanism 5 is so constructed as to move the instantaneous center upward and forward as the seat back 3 is rotated.

The action and effects of the seat apparatus 1 are described next. The seat back 3 is usually biased toward and kept at the usual position by the springs 6 except during a rear crash of the vehicle. A load exerted on the seat back 3 by the waist Ma and neighboring body parts of the passenger M upon a rear crash of the vehicle, the entire seat back 3 supported by the seat back supporting mechanism 5 is rotated from its usual position against the biasing forces of the springs 6 about the instantaneous center located above where the load has been exerted, and the head rest 4 is accordingly moved forward and upward.

Since the head rest 4 is rotated together with the entire seat back 3 and substantially all the load exerted by the passenger's waist Ma and neighboring body parts can act as a force for rotating the seat back 3 upon the rear crash of the vehicle by providing the seat back supporting mechanism 5, the seat back 3 can be rotated with an improved response, enabling a quick movement of the head rest 4 forward and upward. Further, since the seat back 3 and the head rest 4 can be rotated while being integrally connected to each other, rigidity for supporting the load exerted on the head rest 4 by the passenger's head Mb can be effectively enhanced by a simple construction.

When the instantaneous center of the seat back 3 is moved forward and upward as the seat back 3 is rotated, the head rest 4 is inclined obliquely upward to the front with respect to the seat cushion 2. Thus, a moving speed of the head rest 4 in forward direction when receiving the passenger's head Mb decreases, thereby reducing an impact given to the head Mb by the head rest 4. Further, since the instantaneous center of the seat back 3 is moved upward as the seat back 3 is rotated, a distance c1 between the head rest 4 and the instantaneous center is shorter at the rotation end position than at the usual position. In other words, a moment for rotating the seat back 3 toward its usual position which is created by a force exerted by the passenger's head Mb becomes smaller, making it difficult for the head rest 4 to rotate to its usual position.

As a result, the passenger's head Mb which tries to move backward or backward and upward depending upon the position of the seat back 3 upon a rear crash of the vehicle can be effectively received by the head rest 4, thereby preventing an excessively large impact from acting on the head or neck of the passenger M. On the other hand, since the instantaneous center of the seat back 3 can be set at a relatively low position during the usual period, a moment for rotating the seat back 3 from its usual position which is created by a load exerted on the seat back 3 by the passenger's waist Ma and neighboring body parts can be made smaller, with the result that the seat back 3 can be securely held at the usual position by the springs 6.

In the seat back supporting mechanism 5, upon a rear crash of the vehicle, the seat back 3 is pivoted to move backward and upward with respect to the seat cushion 2 along the arcuate trace by the first supporting portions 30 while being rotated and moved upward with respect to the seat cushion 2 by the second supporting portions 40 provided above the first supporting portions 30. Thus, the entire seat back 3 can be rotated to securely move the head rest 4 forward and upward and, simultaneously, the instantaneous center of the seat back 3 can be securely moved upward and forward. Since the head rest 4 is supported together with the seat back 3 by the first and second supporting portions 30, 40, rigidity for supporting the load exerted on the seat back 3 and the head rest 4 by the passenger M can be securely enhanced.

The first supporting portions 30 have a simple construction including the links 30, and the second supporting portions 40 have a simple construction including the hollow guides 41 and the engaging pins 42. Despite their simple constructions, the first and second supporting portions 30, 40 can securely achieve effects of securely moving the head rest 4 forward and upward by rotating the entire seat back 3, securely moving the instantaneous center of the seat back 3 upward and forward as the seat back 3 is rotated, and enhancing rigidity for supporting the load exerted on the seat back 3 and the head rest 4 by the passenger M. These supporting portions 30, 40 are also very advantageous in terms of production costs.

Particularly, since the intermediate portion of the seat back 3 with respect to height direction is designed not to transit in forward and backward directions during the rotation of the seat back 3, the passenger's back and neighboring body parts can be stably received by the seat back 3 without exerting a vertically acting load on the passenger's thoracic vertebrae.

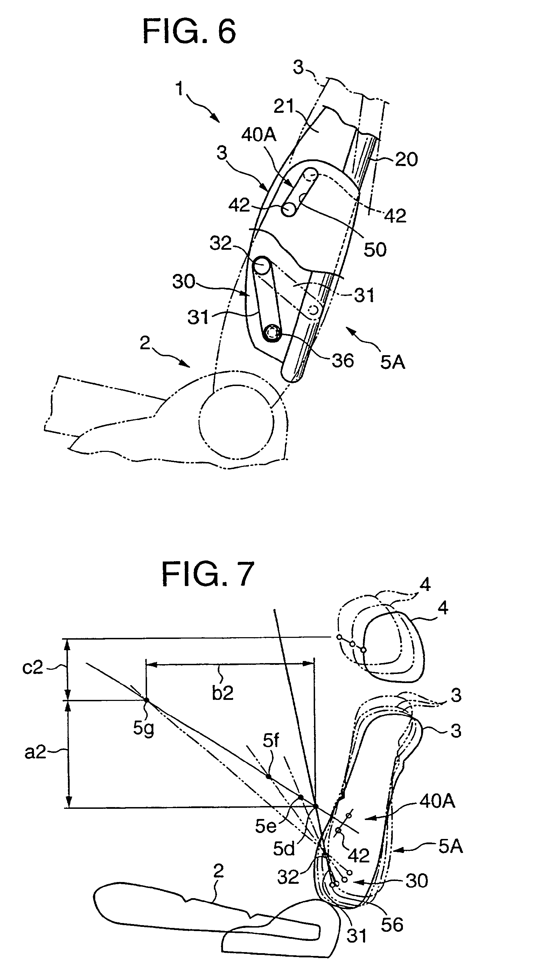

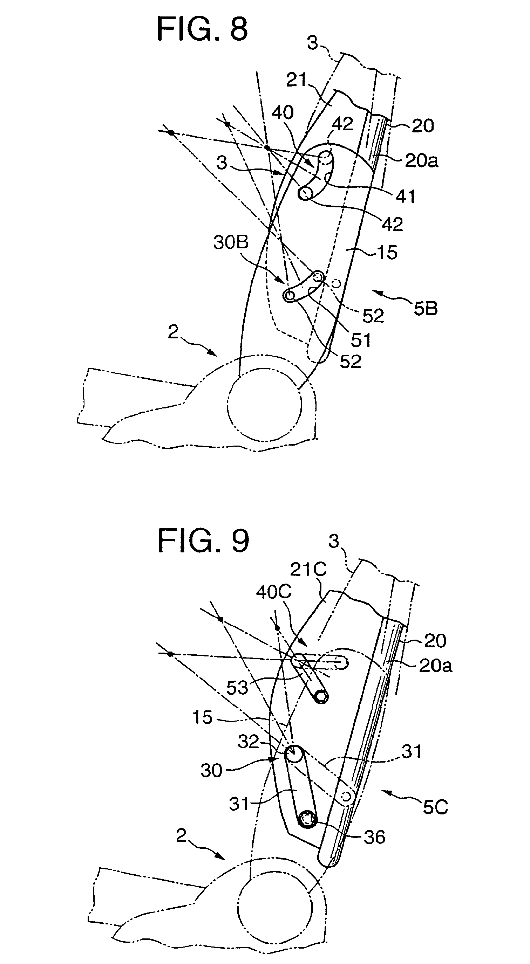

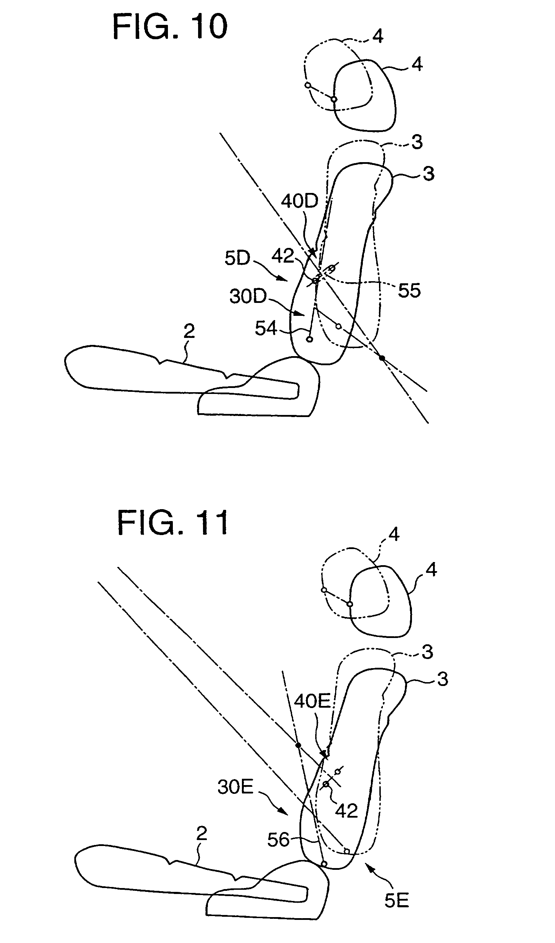

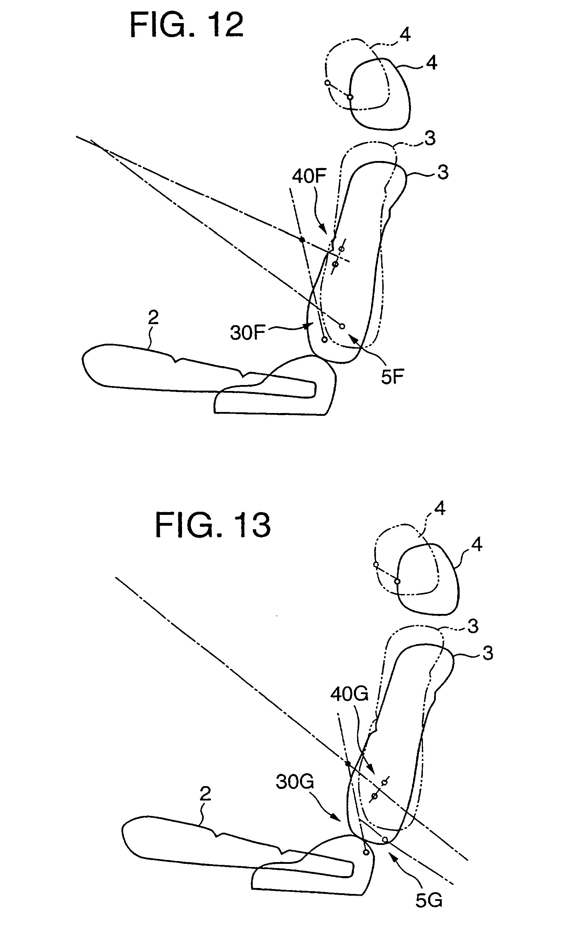

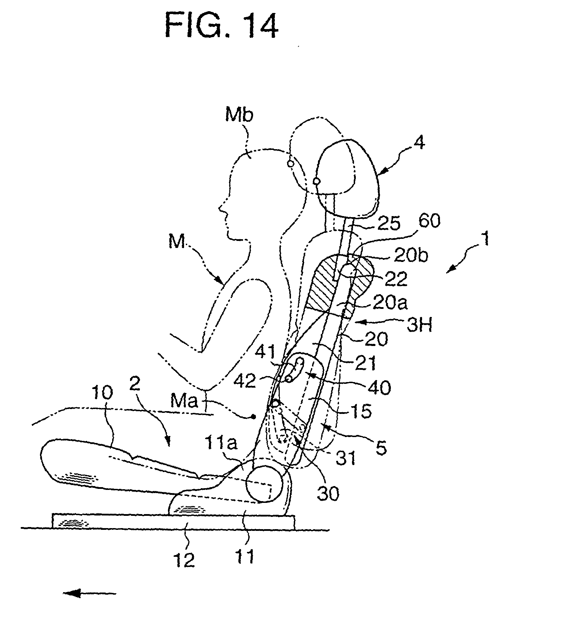

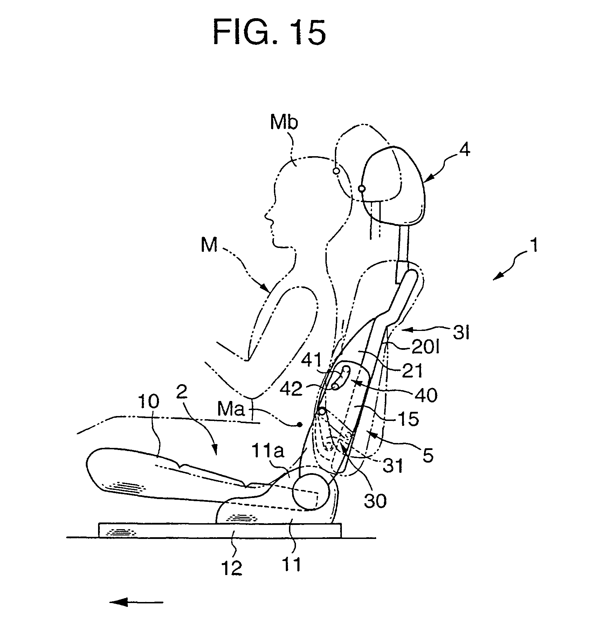

Next, modifications of the foregoing embodiment are described. It should be noted that the same parts as those of the foregoing embodiment are not described by being identified by the same reference numerals.
1) Instead of the arcuate hollow guides 41 formed in the second supporting portions 40 of the seat back supporting mechanism 5, straight hollow guides 50 inclined such that their bottom ends are located more forward than their upper ends may be formed in second supporting portions 40A as shown in FIG. 6. With such hollow guides 50, the instantaneous center of the seat back 3 transits from a rotation initial position 5d to a rotation end position 5g via rotation intermediate positions 5e, 5g as shown in FIG. 7.
   The instantaneous center of the seat back 3 at a certain position is approximately calculated as an intersection of a perpendicular bisector of a line segment extending in the longitudinal direction of the hollow guide 50 and an extension of the length of the link 31. As can be seen from FIG. 7, the instantaneous center 5g at the rotation end position of the seat back 3 is located above and before the instantaneous center 5d at the usual position by a distance a2 and a distance b2, respectively.
   When the head rest 4 is moved forward and upward to move the instantaneous center of the seat back 3 forward by the distance b2 and upward by the distance a2, the head rest 4 is significantly inclined significantly upward to the front with respect to the instantaneous center. Accordingly, a forward component of the moving speed of the head rest 4 for receiving the passenger's head Ma becomes significantly smaller, with the result that an impact exerted on the head Ma by the head rest 4 can be maximally reduced.
   Further, when the head rest 4 is moved forward and upward to move the instantaneous center of the seat back 3 by the distance a2, a vertical distance c2 between the head rest 4 and the instantaneous center when the passenger's head Ma is received by the head rest 4 is significantly shorter than at the usual position. In other words, it is highly unlikely for the head rest 4 to rotate to the usual position. This modification has substantially the same action and effects as the foregoing embodiment.
2) As shown in FIG. 8, a seat back supporting mechanism 5B includes first and second supporting portions 30B, 40 for supporting the seat back 3 in two vertically different positions so as to be rotatable and movable upward with respect to the seat cushion 2 a load exerted by the waist Ma and neighboring body parts of the passenger M. Each of the first supporting portions 30B is comprised of an arcuate hollow guide 51 formed in the corresponding seat cushion bracket 15 and an engaging pin 52 which is so secured to the corresponding side frame 21 as to project outward and engaged with the hollow guide 51. The hollow guide 51 may be shaped such that a trace of movement of the engaging pin 52 along the hollow guide 51 coincides with a trace of movement of one end of the link 31 of the foregoing embodiment. This modification has substantially the same action and effects as the foregoing embodiment.
3) As shown in FIG. 9, a seat back supporting mechanism 5C according to a comparative example includes first and second supporting portions 30, 40C for supporting the seat back 3 in two vertically different positions so as to be pivotal backward and upward with respect to the seat cushion 2 a load exerted by the waist Ma and neighboring body parts of the passenger M. Each of the second supporting portions 40C includes a link 53 having one end thereof rotatably coupled to the corresponding seat cushion bracket 15 and the other end thereof rotatably coupled to the corresponding side frame 21 of the seat back 3. The seat back supporting mechanism 5C may be constructed such that a trace of movement of the other end of the link 53 coincides with the trace of movement of the engaging pin 32. action and effects as the foregoing embodiment.
4) Although not shown, the first supporting portions may each include a hollow guide formed in the corresponding seat cushion bracket 15 and an engaging pin which is so secured to the corresponding side frame 21 as to project outward and engaged in the hollow guide, whereas the second supporting portions may each include a link having one end thereof rotatably coupled to the seat cushion bracket 15 and the other end thereof rotatably coupled to the corresponding side frame 21 of the seat back 3. This modification has substantially the same action and effects as the foregoing embodiment.
5) As in a seat back supporting mechanism 5D according to a comparative example shown in FIG. 10, an angle of rotation of a link 54 of each first supporting portion 30D may be set larger by slightly inclining the link 54 backward at the usual position, and the angle of inclination of a hollow guide 55 of each second supporting portion 40D with respect to horizontal direction may be moderated. With such first and second supporting portions 30D, 40D, the head rest 4 can be moved forward and upward as much as in the foregoing embodiment as indicated in phantom, and a forward movement of the upper end portion of the seat back 3 can be suppressed. In other words, exertion of an excessively large load on the passenger's head and neck can be more effectively suppressed by moderating an impact exerted on the seat back 3 by the shoulders and neighboring body parts of the passenger.
6) Each first supporting portion 30E may have an elongated link 56 as in a seat back supporting mechanism 5E shown in FIG. 11. This modification has substantially the same action and effects as the foregoing embodiment.
7) First and second supporting portions 30F and 40F may be spaced apart by a long distance as in a seat back supporting mechanism 5F shown in FIG. 12. This modification also has substantially the same action and effects as the foregoing embodiment.
8) First and second supporting portions 30G and 40G may be provided at lower positions as in a seat back supporting mechanism 5G shown in FIG. 13.
9) As shown in FIG. 14, a cushioning member 60 made of foamed material may be provided at least at the upper end of a seat back 3H. Then, an impact acting on the shoulders and neighboring body parts of the passenger M can be further more effectively alleviated when the passenger M is received by the seat back 3H upon a rear crash of the vehicle.
10) As shown in FIG. 15, an upper end portion of a frame 201 of a seat back 3H corresponding to the shoulders and neighboring body parts of the passenger M may be offset backward (by, for example, about 30 mm). This permits a thick cushioning member or the like to be provided before the frame 201 at the upper end portion of the frame 201. Thus, an action of alleviating an impact which will act on the shoulders and neighboring body parts of the passenger M when the passenger M is received by the seat back 3I upon a rear crash of the vehicle can be improved.
11) Instead of spring members such as the springs 6, a holding mechanism may be provided for holding the seat back 3 at its usual position with respect to the seat cushion 2 during the usual period and making the seat back 3 free to rotate from the usual position upon a rear crash of the vehicle. This holding mechanism may be constructed such that engaging members are disengaged or a member for fixedly coupling the seat back to the seat cushion is breakable upon action of an impact resulting from the rear crash of the vehicle.
12) In the case that the first and second supporting portions include hollow guides and engaging pins, the hollow guides may be formed in the side frames 21 of the seat back 3 and the engaging pins may be secured to the seat cushion brackets 15.
13) The seat back 3 and the heat rest 4 may be integrally formed.
14) The constructions of the above seat apparatus are nothing more than examples. Various other changes or modification may be made without departing the scope of the present invention.

As described above, an inventive seat apparatus comprises a seat cushion, a support member, a seat back provided with a head rest, and a seat back supporting mechanism operatively connected with the support member for movably supporting the seat back in such a way that a load exerted on the seat back by a passenger's waist part upon a rear crash of the vehicle causes a rotation of the entire seat back from its usual position about an instantaneous center located above the load exerting position to thereby move the head rest forward and upward, and move the instantaneous center of the seat back upward and forward as the seat back rotates.

In this seat apparatus, when the load is exerted on the seat back by the passenger's waist part upon the rear crash of the vehicle causes a rotation of the entire seat back by the seat back supporting mechanism for movably supporting the seat back about the instantaneous center located above the load exerting position, thereby moving the head rest forward and upward.

By providing the seat back supporting mechanism, the entire seat back is rotated together with the head rest and substantially the entire load inserted by the passenger's waist part acts as a force for rotating the seat back upon the rear crash of the vehicle. Accordingly, the moving response of the seat back is improved, and the head rest fitted on the seat back can be quickly moved forward and upward. Further, since the seat back and the head rest can be integrally coupled to each other, the rigidity for supporting the load exerted on the head rest by the passenger's head can be enhanced, with the result that the passenger's head which tries to move backward or backward and upward can be securely received by the head rest.

Since the instantaneous center of the seat back is moved forward and upward as the seat back rotates, the head rest is inclined obliquely upward to the front with respect to the seat cushion. Thus, the moving speed of the head rest in forward direction when receiving the passenger's head decreases, thereby reducing the impact given to the head by the head rest. Further, since the instantaneous center of the seat back is moved upward as the seat back rotates, a moment for rotating the seat back toward its usual position which is created by a force exerted by the passenger's head becomes smaller when the passenger's head is received by the head rest.

Further, since the instantaneous center of the seat back is moved upward as the seat back rotates, a moment for rotating the seat back which is created by a load exerted on the seat back by the passenger's waist part upon the rear crash of the vehicle increases, which is advantageous in bringing the passenger's head quickly closer to the head rest. As a result, the passenger's head can be effectively received by the head rest upon the rear crash of the vehicle. On the other hand, since the instantaneous center of the seat back can be set at a relatively low position during the usual period, a moment for rotating the seat back from its usual position which is created by a load exerted on the seat back by the passenger's waist part can be made smaller, which is advantageous in holding the seat back at the usual position.

Preferably, the seat back supporting mechanism may be provided in a position corresponding to a lower half of the seat back. With this construction, by providing the seat back supporting mechanism in the position corresponding to the lower half of the seat back, the length of the support member can be shortened, bringing about an advantage of reduced production costs. Even if the support member is shortened, the seat back and the support member can be coupled via the seat back supporting mechanism such that the head rest is moved forward and upward and, simultaneously, the instantaneous center of the seat back is moved upward and forward when the seat back is rotated.

Further, the seat back supporting mechanism includes a first supporting portion for pivotally supporting the seat back in such a way that the seat back is movable backward and upward along an arcuate trace with respect to the seat cushion, and a second supporting portion provided above the first supporting portion for supporting the seat back in such a way that the seat back is rotatable and movable upward with respect to the seat cushion.

With this construction, upon the rear crash of the vehicle, the seat back is pivoted to move backward and upward along the arcuate trace with respect to the seat cushion by the first supporting portion while being rotated and moved upward with respect to the seat cushion by the second supporting portion located above the first supporting portion. Accordingly, the entire seat back can be rotated to securely move the head rest forward and upward. Simultaneously, the instantaneous center of the seat back can be securely moved upward and forward. Further, since the head rest is supported together with the seat back by the first and second supporting portions, the rigidity for supporting the load exerted on the seat back and the head rest by the passenger can be securely enhanced.

The first supporting portion and the second supporting portion may be preferably provided in a position corresponding to a lower half of the seat back. In this case, the first supporting portion is adapted fro coupling a bottom end of the seat back with the support member. The second supporting portion is adapted for coupling an upper end of the lower half of the seat back with the support member. With this construction, the first and second supporting portions are provided in the position corresponding to the lower half of the seat back. Accordingly, the length of the support member can be shortened, bringing about an advantage of reduced production costs.

Preferably, the first supporting portion may include a link having an upper end rotatably coupled to the support member and a bottom end rotatably coupled to the seat back. Preferably, also, the first supporting portion may include an arcuate hollow guide formed in either one of the support member and the seat back and an engaging pin secured to the other of the support member and the seat back and engageable with the hollow guide. Preferably, further, the second supporting portion may include an arcuate hollow guide formed in either one of the support member and the seat back and an engaging pin secured to the other of the support member and the seat back and engageable with the hollow guide in sliding contact therewith. These constructions can simplify the seat apparatus, thus reducing the production costs considerably.

Preferably, the second supporting portion may include a link having an upper end rotatably coupled to the support member and a bottom end rotatably coupled to the seat back. With this construction, when a load is exerted on the seat back by the passenger's waist part upon a rear crash of the vehicle causes a rotation of the entire seat back from the usual position about its instantaneous center located above the load exerting position by the seat back supporting mechanism including the second supporting portion made of the link, thereby moving the head rest forward and upward.

Moreover, the seat back supporting mechanism includes a link having an upper end rotatably coupled to the support member and a bottom end rotatably coupled to the seat back, an arcuate hollow guide formed in either one of the support member and the seat back, and an engaging pin secured to the other of the support member and the seat back and engageable with the hollow guide in sliding contact therewith. The hollow guide and the engaging pin are located above the link.

With this construction, when a load is exerted on the seat back by the passenger's waist part upon the rear crash of the vehicle causes a rotation of the entire seat back from the usual position about its instantaneous center located above the load exerting position by the link, hollow guide and engaging pin of the seat back supporting mechanism for movably supporting the seat back, thereby moving the head rest forward and upward. Accordingly, the entire seat back is rotated together with the head rest and substantially the entire load exerted by the passenger's waist part acts as a force for rotating the seat back upon the rear crash of the vehicle. Since the seat back and the head rest can be integrally coupled to each other, further, the rigidity for supporting the load exerted on the head rest by the passenger's head can be enhanced, with the result that the passenger's head which tries to move backward or backward and upward can be securely received by the head rest.

Further, since the instantaneous center of the seat back is moved forward and upward as the seat back rotates, the head rest is inclined obliquely upward to the front with respect to the seat cushion. Thus, the moving speed of the head rest in forward direction when receiving the passenger's head decreases, thereby reducing the impact given to the head by the head rest. Further, since the instantaneous center of the seat back is moved upward as the seat back rotates, a moment for rotating the seat back toward its usual position which is created by a force exerted by the passenger's head becomes smaller when the passenger's head is received by the head rest. Furthermore, since the instantaneous center of the seat back is moved upward as the seat back rotates, a moment for rotating the seat back which is created by a load exerted on the seat back by the passenger's waist part upon the rear crash of the vehicle increases, which is advantageous in bringing the passenger's head quickly closer to the head rest. As a result, the passenger's head can be effectively received by the head rest upon the rear crash of the vehicle. On the other hand, since the instantaneous center of the seat back can be set at a relatively low position during the usual period, a moment for rotating the seat back from its usual position which is created by a load exerted on the seat back by the passenger's waist part can be made smaller, which is advantageous in holding the seat back at the usual position.

It may be preferable to couple a bottom end of the link to a portion of the seat back near its bottom end, and to provide the engaging pin in a position near an upper end of a lower half of the seat back. With this construction, by providing the link of the seat back supporting mechanism in the position corresponding to the lower half of the seat back and providing the engaging pin thereof near the upper end of the lower half of the seat back, the length of the support member can be shortened, bringing about an advantage of reduced production costs. Even if the support member is shortened, the seat back and the support member can be coupled via the link and the engaging pin such that the head rest is moved forward and upward and, simultaneously, the instantaneous center of the seat back is moved upward and forward when the seat back is rotated.

Preferably, an upper end portion of a seat frame provided in the seat back corresponding to a shoulder and neighboring body parts of the passenger may be offset backward. With this construction, a cushioning member provided before the seat frame can be thickened as much as the seat frame is offset backward at the upper end portion of the frame of the seat back. Accordingly, an impact which will act on the passenger's shoulder and neighboring body parts can be effectively alleviated by the cushioning member when the passenger is received by the seat back upon the rear crash of the vehicle.

Preferably, a cushioning member made of an elastic material may be provided at least at the upper end of the seat back. With this construction, when the passenger is received by the seat back upon the rear crash of the vehicle, an impact which will act on the passenger's shoulder and neighboring body parts can be effectively alleviated by the cushioning member made of the elastic material provided at least at the upper end of the seat back.

Preferably, the cushioning member may be made of a foamed material. With this construction, when the passenger is received by the seat back upon the rear crash of the vehicle, an impact which will act on the passenger's shoulder and neighboring body parts can be effectively alleviated by the cushioning member made of the foamed material provided at least at the upper end of the seat back.

Preferably, there may be further provided a biasing member for biasing the seat back to rotate to the usual position. With this construction, the seat back can be biased to rotate to its usual position and held there during the usual period other than during the rear crash of the vehicle.

## Claims

1. A seat apparatus for an automotive vehicle, comprising:
a seat cushion (2);
a support member (15) provided on the seat cushion (2);
a seat back (3) provided with a head rest (4); and
a seat back supporting mechanism (5, 5A, 5B, 5C, 5D, 5E, 5F, 5G) which is operatively connected with the support member (15), and movably supports the seat back (3) in such a way that a load exerted on the seat back (3) by a passenger's waist part upon a rear crash of the vehicle causes a rotation of the entire seat back (3) from its usual position about an instantaneous center (5a, 5b, 5c, 5d, 5e, 5f, 5g) located above the load exerting position thereby causing to move the head rest (4) from said usual position forward and upward,
**characterized in that**
the instantaneous center (5a, 5b, 5c, 5d, 5e, 5f, 5g) of the seat back (3) moves upward and forward as the seat back (3) rotates whereby the moving speed of the head rest (4) in forward direction decreases, when receiving a passenger's head, and the moment for rotating the seat back (3) about the instantaneous center (5a, 5b, 5c, 5d, 5e, 5f, 5g) toward its usual position, which is created by a force exerted by the passenger's head, becomes smaller.

2. The seat apparatus according to claim 1, wherein the seat back supporting mechanism (5, 5A, 5B, 5C, 5D, 5E, 5F, 5G) is provided in a position corresponding to the lower half of the seat back (3).

3. The seat apparatus according to claim 1 or 2, further comprising a biasing member (6) for biasing the seat back (3) to rotate to the usual position.

4. The seat apparatus according to any one of claims 1 to 3, wherein the seat back supporting mechanism (5, 5A, 5B, 5C, 5D, 5E, 5F, 5G) includes:
a first supporting portion (30, 30B, 30D, 30E, 30F, 30G) for pivotally supporting the seat back (3) in such a way that the seat back (3) is movable backward and upward along an arcuate trace with respect to the seat cushion (2); and
a second supporting portion (40, 40A, 40C, 40D, 40F, 40G) provided above the first supporting portion (30, 30B, 30D, 30E, 30F, 30G) for supporting the seat back (3) in such a way that the seat back (3) is rotatable and movable upward with respect to the seat cushion (2).

5. The seat apparatus according to claim 4, wherein the first supporting portion (30) includes a link (31) having an upper end rotatably coupled to the support member (15) and a bottom end rotatably coupled to the seat back (3).

6. The seat apparatus according to claim 4, wherein the first supporting portion (30B) includes an arcuate hollow guide (51) formed in either one of the support member (15) and the seat back (3) and an engaging pin (52) secured to the other of the support member (15) and the seat back (3) and engageable with the hollow guide (51).

7. The seat apparatus according to any one of claims 4 to 6, wherein the second supporting portion (40) includes an arcuate hollow guide (41) formed in either one of the support member (15) and the seat back (3) and an engaging pin (42) secured to the other of the support member (15) and the seat back (3) and engageable with the hollow guide (41) in sliding contact therewith.

8. The seat apparatus according to any one of claims 4 to 6, wherein the second supporting portion (40A) includes a straight hollow guide (50) formed in either one of the support member (15) and the seat back (3) and an engaging pin (42) secured to the other of the support member (15) and the seat back (3) and engageable with the hollow guide (50) in sliding contact therewith.

9. The seat apparatus according to any one of claims 4 to 6, wherein the second supporting portion (40C) includes a link (53) having an upper end rotatably coupled to the support member (15) and a bottom end rotatably coupled to the seat back (3).

10. The seat apparatus according to any one of claims 4 to 9, wherein the first supporting portion (30) and the second supporting portion (40) are provided in a position corresponding to a lower half of the seat back (3), and the first supporting portion (30) couples a bottom end of the seat back (3) with the support member (15) and the second supporting portion (40) couples an upper end of the lower half of the seat back (3) with the support member (15).

11. The seat apparatus according to any one of claims 1 to 10, wherein an upper end portion of a seat frame (20) provided in the seat back (3) corresponding to a shoulder part of the passenger is offset backward.

12. The seat apparatus according to any one of claims 1 to 10, wherein a cushioning member (60) made of an elastic material is provided at least at an upper end of the seat back (3).

13. The seat apparatus according to claim 12, wherein the cushioning member (60) is made of a foamed material.

## Patentansprüche

1. Sitzgerät bzw. -vorrichtung für ein Kraftfahrzeug, umfassend:
ein Sitzpolster (2);
ein Support- bzw. Abstützglied (15), welches auf bzw. an dem Sitzpolster (2) vorgesehen ist;
eine Sitzlehne (3), welche mit einer Kopfstütze (4) versehen ist; und
einen eine Sitzlehne abstützenden Mechanismus (5, 5A, 5B, 5C, 5D, 5E, 5F, 5G), welcher operativ mit dem Abstützglied (15) verbunden ist, und bewegbar die Rück- bzw. Sitzlehne (3) in einer derartigen Weise abstützt, daß eine Last, welche auf die Sitzlehne (3) durch ein Taillenteil eines Insassen bei einem rückwärtigen Aufprall bzw. Zusammenstoß des Fahrzeugs ausgeübt ist bzw. wird, eine Rotation der gesamten Sitzlehne (3) von ihrer gewöhnlichen Position um ein momentanes bzw. instantanes Zentrum (5a, 5b, 5c, 5d, 5e, 5f, 5g) bewirkt, welches oberhalb der eine Last ausübenden Position angeordnet ist, wodurch veranlaßt ist bzw. wird, daß sich die Kopfstütze (4) von ihrer gewöhnlichen Position nach vorne und nach oben bewegt,
**dadurch gekennzeichnet, daß**
das momentane Zentrum (5a, 5b, 5c, 5d, 5e, 5f, 5g) der Sitzlehne (3) sich nach oben und vorwärts bewegt, wenn bzw. da sich die Sitzlehne (3) dreht, wodurch die Bewegungsgeschwindigkeit der Kopfstütze (4) in einer Vorwärtsrichtung abnimmt, wenn ein Kopf eines Insassen aufgenommen bzw. empfangen ist, und das Moment für ein Drehen der Sitzlehne (3) um das momentane Zentrum (5a, 5b, 5c, 5d, 5e, 5f, 5g) zu ihrer gewöhnlichen Position, welches durch eine Kraft erzeugt ist, die durch den Kopf des Insassen ausgeübt ist, geringer wird.

2. Sitzvorrichtung nach Anspruch 1, wobei der die Sitzlehne abstützende Mechanismus (5, 5A, 5B, 5C, 5D, 5E, 5F, 5G) in einer Position entsprechend der unteren Hälfte der Sitzlehne (3) vorgesehen bzw. zur Verfügung gestellt ist.

3. Sitzvorrichtung nach Anspruch 1 oder 2, weiterhin umfassend ein beaufschlagendes bzw. Vorspannglied (6) für ein Beaufschlagen der Sitzlehne (3), um zu der gewöhnlichen Position zu rotieren.

4. Sitzvorrichtung nach einem der Ansprüche 1 bis 3, wobei der die Sitzlehne abstützende Mechanismus (5, 5A, 5B, 5C, 5D, 5E, 5F, 5G) enthält:
einen ersten abstützenden bzw. Supportabschnitt (30, 30B, 30D, 30E, 30F, 30G) für ein schwenkbares Abstützen der Sitzlehne (3) in einer derartigen Weise, daß die Sitzlehne (3) nach rückwärts und nach oben entlang einer gekrümmten bzw. gebogenen bzw. bogenförmigen Bahn in bezug auf das Sitzpolster (2) bewegbar ist; und
einen zweiten abstützenden bzw. Supportabschnitt (40, 40A, 40C, 40D, 40F, 40G), welcher über dem ersten abstützenden Abschnitt (30, 30B, 30D, 30E, 30F, 30G) für ein Abstützen der Sitzlehne (3) in einer derartigen Weise vorgesehen ist, daß die Sitzlehne (3) rotierbar und in bezug auf das Sitzpolster (2) nach oben bewegbar ist.

5. Sitzvorrichtung nach Anspruch 4, wobei der erste abstützende Abschnitt (30) eine Verbindung bzw. Kopplung (31) beinhaltet, welche ein oberes Ende rotierbar an das Abstützglied (15) gekoppelt und ein Bodenende rotierbar an die Sitzlehne (3) gekoppelt aufweist.

6. Sitzvorrichtung nach Anspruch 4, wobei der erste abstützende Abschnitt (30B) eine gekrümmte bzw. bogenförmige hohle Führung (51), welche in einem des Abstützglieds (15) und der Sitzlehne (3) ausgebildet ist, und einen eingreifenden Stift bzw. Zapfen (52) beinhaltet, welcher an dem anderen des Abstützglieds (15) und der Sitzlehne (3) gesichert ist und mit der hohlen Führung (51) in Eingriff bringbar ist.

7. Sitzvorrichtung nach einem der Ansprüche 4 bis 6, wobei der zweite abstützende Abschnitt (40) eine gekrümmte bzw. bogenförmige hohle Führung (41), welche in einem des Abstützglieds (15) und der Sitzlehne (3) ausgebildet ist, und einen eingreifenden Stift bzw. Zapfen (42) beinhaltet, welcher an dem anderen des Abstützglieds (15) und der Sitzlehne (3) gesichert ist und mit der hohlen Führung (41) in einem gleitenden Kontakt damit in Eingriff bringbar ist.

8. Sitzvorrichtung nach einem der Ansprüche 4 bis 6, wobei der zweite abstützende Abschnitt (40A) eine gerade hohle Führung (50), welche in einem des Abstützglieds (15) und der Sitzlehne (3) ausgebildet ist, und einen eingreifenden Stift bzw. Zapfen (42) beinhaltet, welcher an dem anderen des Abstützglieds (15) und der Sitzlehne (3) gesichert ist und mit der hohlen Führung (50) in einem gleitenden Kontakt damit in Eingriff bringbar ist.

9. Sitzvorrichtung nach einem der Ansprüche 4 bis 6, wobei der zweite abstützende Abschnitt (40C) eine Verbindung bzw. Kopplung (53) aufweist, welche ein oberes Ende rotierbar an das Abstützglied (15) gekoppelt und ein Bodenende rotierbar an die Sitzlehne (3) gekoppelt aufweist.

10. Sitzvorrichtung nach einem der Ansprüche 4 bis 9, wobei der erste abstützende Abschnitt (30) und der zweite abstützende Abschnitt (40) in einer Position entsprechend einer unteren Hälfte der Sitzlehne (3) vorgesehen sind, und der erste abstützende Abschnitt (30) ein Bodenende der Sitzlehne (3) mit dem Abstützglied (15) koppelt und der zweite abstützende Abschnitt (40) ein oberes Ende der unteren Hälfte der Sitzlehne (3) mit dem Abstützglied (15) koppelt.

11. Sitzvorrichtung nach einem der Ansprüche 1 bis 10, wobei ein oberer Endabschnitt eines Sitzrahmens (20), welcher in der Sitzlehne (3) entsprechend einem Schulterteil des Insassen vorgesehen ist, nach rückwärts versetzt ist.

12. Sitzvorrichtung nach einem der Ansprüche 1 bis 10, wobei ein polsterndes Glied (60), welches aus einem elastischen Material hergestellt ist, wenigstens an einem oberen Ende der Sitzlehne (3) vorgesehen ist.

13. Sitzvorrichtung nach Anspruch 12, wobei das polsternde Glied (60) aus einem geschäumten Material hergestellt ist.

## Revendications

1. Dispositif de siège pour véhicule automobile, qui comprend :
une assise (2) de siège,
un élément de support (15) prévu sur l'assise (2) du siège,
un dossier de siège (3) doté d'un appuie-tête (4) et
un mécanisme (5, 5A, 5B, 5C, 5D, 5E, 5F, 5G) de support du dossier de siège, relié fonctionnellement à l'élément de support (15) et qui soutient de manière déplaçable le dossier (3) du siège de telle sorte que la charge exercée sur le dossier (3) du siège par le torse d'un passager lors d'un choc arrière sur le véhicule entraîne une rotation de la totalité du dossier (3) du siège depuis sa position habituelle autour d'un centre instantané (5a, 5b, 5c, 5d, 5e, 5f, 5g) situé au-dessus de la position où la charge est exercée, ce qui amène un déplacement de l'appuie-tête (4) depuis ladite position habituelle vers l'avant et vers le haut,
**caractérisé en ce que**
le centre instantané (5a, 5b, 5c, 5d, 5e, 5f, 5g) du dossier (3) du siège se déplace vers le haut et vers l'avant lorsque le dossier (3) du siège tourne, suite à quoi la vitesse de déplacement de l'appuie-tête (4) dans la direction avant diminue lorsqu'il reçoit la tête du passager et le couple de rotation du dossier (3) du siège créé par la force exercée par la tête du passager autour du centre instantané (5a, 5b, 5c, 5d, 5e, 5f, 5g) vers sa position habituelle diminue.

2. Dispositif de siège selon la revendication 1, dans lequel le mécanisme (5, 5A, 5B, 5C, 5D, 5E, 5F, 5G) de soutien du dossier est prévu dans une position qui correspond à la moitié inférieure du dossier (3) du siège.

3. Dispositif de siège selon les revendications 1 ou 2, qui comprend en outre un élément de sollicitation (6) qui sollicite le dossier (3) du siège de telle sorte qu'il tourne vers sa position habituelle.

4. Dispositif de siège selon l'une quelconque des revendications 1 à 3, dans lequel le mécanisme (5, 5A, 5B, 5C, 5D, 5E, 5F, 5G) de soutien du dossier du siège comporte:
une première partie de support (30, 30B, 30D, 30E, 30F, 30G) qui soutient à pivotement le dossier (3) du siège de telle sorte que le dossier (3) du siège peut se déplacer par rapport à l'assise (2) du siège vers l'arrière et vers le haut le long d'un trajet arqué et
une deuxième partie de support (40, 40A, 40C, 40D, 40F, 40G) prévue au-dessus de la première partie de support (30, 30B, 30D, 30E, 30F, 30G) qui soutient le dossier (3) du siège de telle sorte que le dossier (3) du siège puisse tourner et se déplacer vers le haut par rapport à l'assise (2) du siège.

5. Dispositif de siège selon la revendication 4, dans lequel la première partie de support (30) contient une liaison (31) dont une extrémité supérieure est couplée à rotation à l'élément de support (15) et l'extrémité de base est couplée à rotation au dossier (3) du siège.

6. Dispositif de siège selon la revendication 4, dans lequel la première partie de soutien (30B) contient un guide creux courbe (51) formé dans l'élément de support (15) ou dans le dossier (3) du siège et un goujon d'engagement (52) fixé au dossier (3) du siège ou à l'élément de support (15) et apte à être engagé dans le guide creux (51).

7. Dispositif de siège selon l'une quelconque des revendications 4 à 6, dans lequel la deuxième partie de soutien (40) contient un guide creux courbe (41) formé dans l'élément de support (15) ou dans le dossier (3) du siège et un goujon d'engagement (42) fixé au dossier (3) du siège ou à l'élément de support (15) et apte à être engagé dans le guide creux (41) de manière à coulisser sur lui.

8. Dispositif de siège selon l'une quelconque des revendications 4 à 6, dans lequel la deuxième partie de soutien (40A) contient un guide creux rectiligne (50) formé dans l'élément de support (15) ou dans le dossier (3) du siège et un goujon d'engagement (42) fixé sur le dossier (3) du siège ou l'élément de support (15) et apte à être engagée dans le guide creux (50) de manière à y coulisser.

9. Dispositif de siège selon l'une quelconque des revendications 4 à 6, dans lequel la deuxième partie de soutien (40C) contient une liaison (53) dont l'extrémité supérieure est accouplée à rotation à l'élément de support (15) et dont l'extrémité inférieure est accouplée à rotation au dossier (3) du siège.

10. Dispositif de siège selon l'une quelconque des revendications 4 à 9, dans lequel la première partie de soutien (30) et la deuxième partie de soutien (40) sont prévues dans une position qui correspond à la moitié inférieure du dossier (3) du siège, la première partie de soutien (30) accouplant l'extrémité inférieure du dossier (3) du siège à l'élément de support (15) et la deuxième partie de soutien (40) accouple l'extrémité supérieure de la moitié inférieure du dossier (3) du siège à l'élément de support (15).

11. Dispositif de siège selon l'une quelconque des revendications 1 à 10, dans lequel la partie d'extrémité supérieure du cadre (20) du siège prévu dans le dossier (3) du siège et qui correspond à l'épaule du passager est décalée vers l'arrière.

12. Dispositif de siège selon l'une quelconque des revendications 1 à 10, dans lequel un élément d'amortissement (60) réalisé en un matériau élastique est prévu au moins à l'extrémité supérieure du dossier (3) du siège.

13. Dispositif de siège selon la revendication 12, dans lequel l'élément d'amortissement (60) est réalisé en un matériau en mousse.
